(19) Europäisches Patentamt
European Patent Office
Office européen des brevets

(11) Veröffentlichungsnummer: **0 048 878**
**B1**

(12) # EUROPÄISCHE PATENTSCHRIFT

(45) Veröffentlichungstag der Patentschrift: **18.07.84**

(51) Int. Cl.³: **C 07 F 9/15,** C 07 F 9/145, C 08 K 5/52, C 08 L 67/02

(21) Anmeldenummer: **81107218.0**

(22) Anmeldetag: **14.09.81**

(54) **Neue Hydroxiphenylgruppen enthaltende Phosphorigsäureester, Verfahren zu ihrer Herstellung und ihre Verwendung als Stabilisatoren für thermoplastische Polyester.**

(30) Priorität: **26.09.80 DE 3036391**

(43) Veröffentlichungstag der Anmeldung:
**07.04.82 Patentblatt 82/14**

(45) Bekanntmachung des Hinweises auf die Patenterteilung:
**18.07.84 Patentblatt 84/29**

(84) Benannte Vertragsstaaten:
**CH DE FR GB IT LI NL**

(56) Entgegenhaltungen:
**DE - A - 1 543 530**
**DE - A - 3 003 984**
**US - A - 3 053 878**
**US - A - 3 192 243**
**US - A - 3 305 608**
**US - A - 3 441 633**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Buysch, Hans-Josef, Dr., Brandenburger Strasse 28, D-4150 Krefeld (DE)**
Erfinder: **Binsack, Rudolf, Dr., Bethelstrasse 4a, D-4150 Krefeld (DE)**
Erfinder: **Rempel, Dieter, Dr., Max-Beckmann-Strasse 35, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 048 878 B1**

BUNDESDRUCKEREI BERLIN

**Beschreibung**

Die Erfindung betrifft Verbindungen, die sich von substituierten Phenolen und speziellen Derivaten der phosphorigen Säure ableiten, ein Verfahren zur Herstellung dieser neuen Verbindungen und ihre Verwendung als Stabilisatoren für thermoplastische Polyester, insbesondere Polyalkylenterephthalate.

Polyalkylenterephthalate, wie Polyethylen- und Polybutylenterephthalat, sowie Polyester, deren Säure- und Alkoholkomponenten aromatischer Natur sind, finden aufgrund ihrer ungewöhnlichen Eigenschaftskombination zunehmend Verwendung zur Herstellung von Fasern, Filmen und Formkörpern durch Spritzguß oder Extrusion.

An Polyalkylenterephthalaten schätzt man besonders die mechanische Festigkeit, Abrieb- und Verschleißfestigkeit, Steifheit, Härte, hohe Wärmeformbeständigkeit, Widerstandsfähigkeit gegen chemische Einflüsse und gute Eignung für den Einsatz auf dem Elektrosektor. Aromatische Polyester zeichnen sich besonders durch hohe Erweichungstemperatur und hohe Glasübergangstemperatur sowie gute Schlag- bzw. Kerbschlagzähigkeit aus.

Aufgrund ihrer hohen Kristallinität eignen sich die Polyalkylenterephthalate und aufgrund ihrer hohen Einfriertemperatur die aromatischen Polyester hervorragend zur Herstellung von Formteilen, die hohen Temperaturen ausgesetzt werden müssen.

Allerdings unterliegen thermoplastische Polyester wegen der Instabilität der Esterverbindungen, die gegen thermische, oxidative oder hydrolytische Spaltung anfällig sind, in Gegenwart von Wasser, Sauerstoff und/oder bei thermischer Belastung (also z. B. unter den normalen Verarbeitungsbedingungen, erst recht bei Wärmelagerung oder bei Kontakt mit heißem Wasser) einem teilweisen Abbau.

Diese Abbauvorgänge führen zu einer Verschlechterung der Eigenschaften, insbesondere der Dehnungsfestigkeit und der Schlagzähigkeit sowie der Eigenschaften, die für den Einsatz auf dem Elektrosektor wichtig sind. Auch die manchmal auftretende Verfärbung kann bei einer Reihe von Anwendungen nicht toleriert werden.

Zur Überwindung dieser Nachteile wurde bereits vorgeschlagen, die Polyester mit Stabilisatoren zu versetzen. Vornehmlich werden bestimmte Ester der phosphorigen Säure und sterisch gehinderte Phenole empfohlen (vgl. Ullmanns Encyclopädie der technischen Chemie, 4. Auflage, Band 8, S. 25, 26, 30, 39—41, Verlag Chemie, Weinheim 1974). Die Ausrüstung der Polyester mit diesen Verbindungen kann aber den thermischen, oxidativen und/oder hydrolytischen Abbau bzw. die daraus resultierende Verfärbung nicht in allen Fällen zuverlässig verhindern; dies gilt insbesondere für die Langzeitalterung in Heißluft oder heißem Wasser. Es bestand daher ein Bedürfnis, diesem Mangel abzuhelfen.

Gegenstand der Erfindung sind Verbindungen aus der Reihe

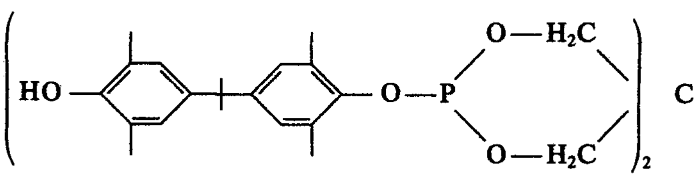

(1)

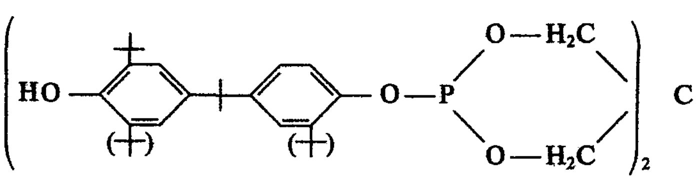

(2)

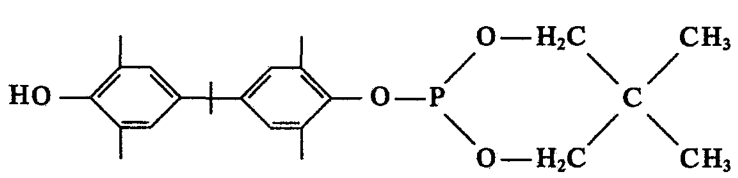

(3)

In der Formel (2) in Klammer gesetzte Substituenten (tert.-Butyl) weisen auf ein Isomerengemisch hin, wobei die in Klammern stehenden tert.-Butylreste gegebenenfalls vorhanden sind.

Die erfindungsgemäßen Verbindungen gestatten die Herstellung von thermoplastischen Polyestern, die selbst bei Langzeitalterung nur geringfügige Veränderungen erleiden und deshalb ein weitgehend konstantes Eigenschaftsniveau aufweisen.

Die DE-OS 1 543 530, die DE-OS 3 003 984 und die US-PS 3 053 878 betreffen Verbindungen, die sich von substituierten Phenolen, Pentaerythrit und Derivaten der phosphorigen Säure ableiten. Sie werden als Stabilisatoren, u. a. auch für thermoplastische Polyester, empfohlen. Eigene Untersuchungen haben jedoch ergeben, daß die erfindungsgemäßen Verbindungen diesen Stabilisatoren des Standes der Technik überlegen sind.

Die erfindungsgemäßen Verbindungen lassen sich durch Reaktion von Derivaten der phosphorigen

Säure mit Bisphenolen, Pentaerythrit oder Neopentylglykol auf an sich bekannte Weise herstellen.

Weiterer Gegenstand der Erfindung ist also ein Verfahren zur Herstellung der neuen Verbindungen, dadurch gekennzeichnet, daß man reaktionsfähige Derivate der phosphorigen Säure mit

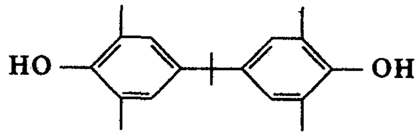

beziehungsweise

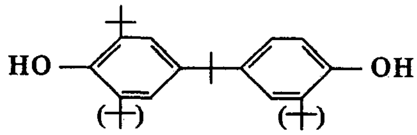

und Pentaerythrit oder Neopentylglykol umsetzt.

Bevorzugte reaktionsfähige Derivate der phosphorigen Säure sind Phosphortrihalogenide wie Phosphortrichlorid oder Phosphortribromid, Phosphorigsäureesterhalogenide wie Phosphorigsäurephenylesterdichlorid und Phosphorigsäureester wie Triethylphosphit oder Triphenylphosphit.

Das Herstellungsverfahren sei nachfolgend beispielhaft erörtert:

Man kann beispielsweise Phosphortrichlorid mit Neopentylglykol im Molverhältnis 1 : 1 unter HCl-Abspaltung zu einem cyclischen Phosphorigsäureesterchlorid umsetzen, das dann mit einem Mol Bisphenol unter Entfernung des letzten Mols HCl zu der gewünschten phenolischen Verbindung reagiert. Statt Phosphortrichlorid lassen sich in gleicher Weise Phosphorigsäureester, wie z. B. Triphenylphosphit, einsetzen, wobei in analoger Weise vorgegangen und die Umesterung vorzugsweise im Vakuum durchgeführt wird, damit sich die Abspaltungsprodukte rasch und möglichst vollständig aus dem Reaktionsgemisch entfernen.

Man kann natürlich auch alle Reaktionskomponenten gleichzeitig miteinander umsetzen. Zweckmäßiger und übersichtlicher ist es jedoch, zunächst die cyclischen Phosphorigsäureester herzustellen und diese dann mit den Bisphenolen in den Molverhältnissen bzw. annähernd den Molverhältnissen miteinander zu kondensieren, die sich aus der Struktur der gewünschten Endprodukte ergeben.

Ein weiterer Gegenstand der Erfindung ist für die Verwendung der neuen Verbindungen als Stabilisatoren für thermoplastische Polyester, insbesondere Polyalkylenterephthalate.

Thermoplastische Polyester im Sinne der Erfindung sind Reaktionsprodukte aus aromatischen Dicarbonsäuren (oder ihren reaktionsfähigen Derivaten) und aliphatischen oder cycloaliphatischen Diolen oder Diphenolen.

Bevorzugte Polyalkylenterephthalate lassen sich aus Terephthalsäure (oder ihren reaktionsfähigen Derivaten) und Alkandiolen mit 2 bis 10 C-Atomen nach bekannten Methoden herstellen (Kunststoff-Handbuch, Bd. VIII, S. 695 ff, Carl Hanser Verlag, München 1973). Besonders bevorzugte Polyalkylenterephthalate sind Polyethylenterephthalate und Poly(butandiol-1,4-terephthalate). Sie besitzen in der Regel eine Intrinsic-Viskosität von 0,5 bis 2,0 dl/g, vorzugsweise 0,6 bis 1,5 dl/g und insbesondere 0,7 bis 1,3 dl/g, gemessen in einem Gemisch aus Phenol und o-Dichlorbenzol (50/50 Gew.-%) bei 25° C.

Aromatische Polyester und Verfahren zu ihrer Herstellung sind ebenfalls bekannt (W. M. Eareckson, J. Polym. Sci. XI, 399—406 (1959); André Conix, »Thermoplastic Polyesters from Bisphenols«, Ind. Eng. Chem., Vol. 51, No. 2, 147—150, Febr. 1959; FR 1 177 517, US 3 351 624, DE-AS 1 445 384). Sie enthalten als einkondensierte Säurereste meistens Tere- und/oder Isophthalsäurereste; bevorzugte aromatische Polyester enthalten Tere- und Isophthalsäurereste insbesondere etwa im Verhältnis 1 : 1.

Bevorzugte Diphenole für die Herstellung der aromatischen Polyester sind Verbindungen der Formel

HO–Z–OH

worin

Z einen zweiwertigen ein- oder mehrkernigen aromatischen Rest mit 6—30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

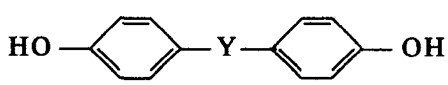

in der

Y eine Einfachbindungen, einen Alkylen- oder Alkylidenrest mit 1—7 C-Atomen, einen Cycloalkylen- oder Cycloalkylidenrest mit 5—12 C-Atomen, —O—, —S—,

$\underset{\underset{O}{\|}}{-S-}$ $-SO_2-$ oder $\underset{\underset{O}{\|}}{-C-}$ bedeutet,

sowie deren kernalkylierte und kernhalogenierte Derivate.

Die aromatischen Polyester besitzen in der Regel relative Lösungsviskositäten von 1,18 bis 2,0, insbesondere von 1,2 bis 1,5 (gemessen in 0,5gew.-%iger Lösung in Dichlormethan bei 25° C).

Die Polyester enthalten die erfindungsgemäßen Stabilisatoren in solchen Mengen, daß eine genügende Stabilisierung erzielt wird; im allgemeinen ist dies bei Mengen von 0,01 bis 2, vorzugsweise von 0,03 bis 1,5, insbesondere von 0,05 bis 1 Gew.-% der Fall.

Die Polyester können die erfindungsgemäßen Stabilisatoren allein oder auch im Gemisch miteinander sowie auch in Kombination mit anderen Stabilisatoren enthalten.

Die Einarbeitung der erfindungsgemäßen Verbindungen kann nach an sich bekannten Methoden während oder nach der Polyesterherstellung erfolgen, indem die Substanzen als solche oder auch in Form eines separat hergestellten Konzentrates in Polyester oder im Gemisch mit anderen Zuschlägen oder Lösungsmitteln eingearbeitet werden. Die Einarbeitung kann jedoch auch unmittelbar vor der Weiterverarbeitung der Polyester erfolgen.

Zur weiteren Eigenschaftsverbesserung können die Formmassen auch andere Zusatzstoffe enthalten, wie z. B. Formtrennmittel, Gleitmittel, Nukleiermittel, Farbstoffe, Pigmente, Füllstoffe, Verstärkungsstoffe, Flammschutzmittel, Weichmacher und Lichtschutzmittel.

Die gefüllten und/oder verstärkten Polyester-Formmassen können bis zu 60 Gew.-%, bezogen auf die Formmasse, eines Füllstoffes und/oder Verstärkungsstoffes enthalten. Bevorzugte Verstärkungsstoffe sind Glasfasern. Bevorzugte Füllstoffe, die auch verstärkend wirken können, sind z. B. Glaskugeln, Glimmer, Silikate, Quarz, Talkum, Titandioxid, Wollastonit.

Flammwidrig ausgerüstete Polyester-Formmassen enthalten im allgemeinen bis zu 30 Gew.-%, bezogen auf die Formmasse, an Flammschutzmittel. Übliche Flammschutzmittel sind z. B. Polyhalogendiphenyl, Polyhalogendiphenylether, Polyhalogenphthalsäure und ihre Derivate und Polyhalogenpolycarbonate, wobei die entsprechenden Bromverbindungen besonders wirksam sind. Außerdem enthalten sie in der Regel einen Synergisten, wie z. B. Antimontrioxid.

## Beispiele

### I. Herstellung erfindungsgemäßer Verbindungen

#### Beispiel 1

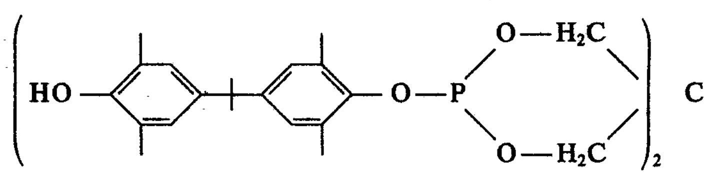

(1)

Ein Gemisch von 155 g (0,5 Mol) Triphenylphosphit und 34 g (0,25 Mol) Pentaerythrit wird bei 140° —170° C und 7—8 mbar unter Rühren umgeestert, wobei 93 g Phenol abdestillieren. Dann gibt man 142 g (0,5 Mol) 4,4′-Dihydroxy-3,3′,5,5′-tetramethyl-diphenyl-propan-2,2 hinzu und erhitzt weiter auf 210°C bei 8—9 mbar. Dabei gehen weitere 41 g Phenol über. Man erhält ein klares, farbloses und sprödes Harz.

Das erhaltene Produkt wird im folgenden Stabilisator A genannt.

#### Beispiel 2

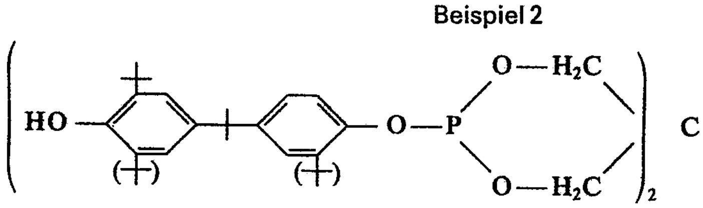

(2)

Man verfährt analog Beispiel 1. Statt 4,4'-Dihydroxy-3,3',5,5'-tetramethyl-diphenyl-propan-2,2 werden 170 g (0,5 Mol) eines Gemisches aus

4,4'-Dihydroxy-3-tert.-butyl-diphenyl-propan-2,2,
4,4'-Dihydroxy-3,3'-di-tert.-butyl-diphenyl-propan-2,2
und
4,4'-Dihydroxy-3,3',5-tritert.-butyl-diphenyl-propan-2,2
eingesetzt.

Nach Abdestillieren von Phenol erhält man ein gelbes Weichharz. Das erhaltene Produkt wird im folgenden Stabilisator B genannt.

Beispiel 3

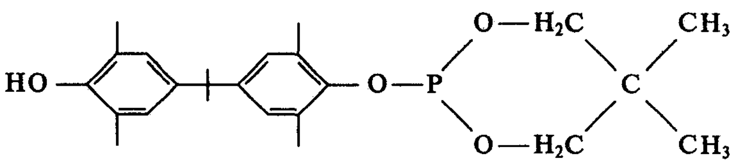
(3)

155 g (0,5 Mol) Triphenylphosphit und 52 g (0,5 Mol) Neopentylglykol werden analog Beispiel 1 im Vakuum bei 138—162°C umgeestert. Nach Abdestillieren von 91 g Phenol gibt man 142 g (0,5 Mol) 4,4'-Dihydroxy-3,3',5,5'-tetramethyldiphenyl-propan hinzu und destilliert bei 160—210°C weitere 49 g Phenol über. Man erhält ein fast farbloses, sprödes Harz; es wird im folgenden Stabilisator C genannt.

Vergleichsstabilisatoren:

Stabilisator M

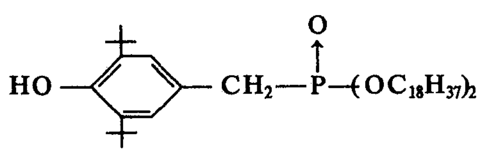

Stabilisator M, O,O-Di-n-octadecyl-3,5-di-tert.-butyl-4-hydroxybenzyl-phosphonat, ist ein handelsüblicher für Polyester empfohlener Stabilisator.

Stabilisator N

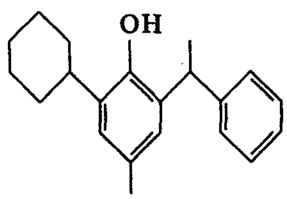

Stabilisator O

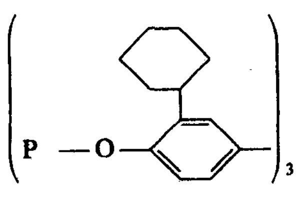

Stabilisator P

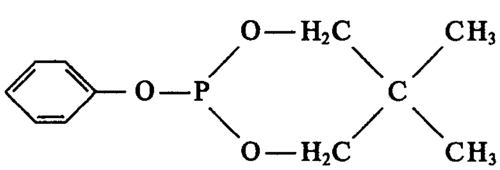

Stabilisator Q

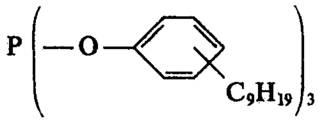

Stabilisator R

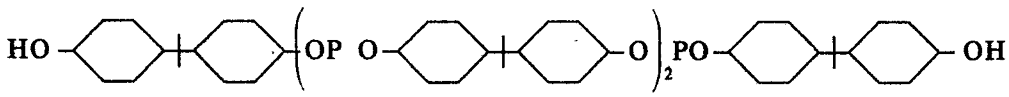

Stabilisator S

4,4′-Isopropylidendiphenyl-bis-[bis-(3-ethyloxetan-3-ylmethyl)-phosphit]

Stabilisator T

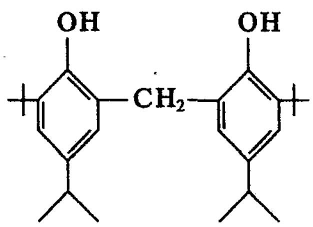

II.Stabilisierung von Polyestern

Auf einer gleichsinnig rotierenden Zweiwellenschnecke (ZSK 32 der Fa. Werner und Pfleiderer) wurden 99,9 bzw. 99,8 Gew.-Teile Poly-(1,4-butylen-terephthalat) mit einer Intrinsic-Viskosität von 1,26 dl/g (gemessen bei 25°C in Phenol/o-Dichlorbenzol im Gewichtsverhältnis 1 : 1), die mit 0,1 bzw. 0,2 Gew.-Teilen Stabilisator grob gemischt waren, aufgeschmolzen und in der Schmelze homogenisiert. Der Schmelzstrang wurde in Wasser abgekühlt und anschließend granuliert. Das Granulat wurde nach dem Trocknen bei 260°C auf einer handelsüblichen Spritzgußmaschine zu Normkleinstäben verspritzt, die in einem Umlufttrockenschrank heißer Luft ausgesetzt wurden bzw. die in 95°C heißem Wasser gelagert wurden. Nach der thermisch-oxidativen Behandlung bzw. nach der Heißwasserbehandlung wurde die Schlagzähigkeit nach DIN 53 453 gemessen.

Tabelle 1

Schlagzähigkeit nach Heißluftalterung bei 160°C [KJ/m²]

| Stabilisator[1]) | 100 h | 300 h | 1000 h |
|---|---|---|---|
| A | n.g.[2]) | n.g. | 52 |
| B | n.g. | n.g. | 55 |
| C | n.g. | n.g. | 42 |
| Vergleichsversuche[1]) | | | |
| M | n.g. | 65 | 12 |
| N | n.g. | 38 | 8 |
| O | n.g. | 36 | 7 |
| R | n.g. | 34 | 6 |
| S | n.g. | 98 | 25 |
| T | n.g. | 67 | 14 |
| N/P[3]) | n.g. | 55 | 10 |

Tabelle 1 (Fortsetzung)

| Stabilisator[1]) | 100 h | 300 h | 1000 h |
|---|---|---|---|
| N/Q[3]) | n.g. | 75 | 15 |
| S/T[3]) | n.g. | 25 | 5 |

[1]) Konzentration 0,1 Gew.-%
[2]) »n.g.« bedeutet »nicht gebrochen«
[3]) Konzentration an Einzelstabilisator je 0,05 Gew.-%

Tabelle 2

Relative Viskosität[1]) nach Heißluftalterung bei 180° C in [dl/g]

| Stabilisator[2]) | 0 h | 220 h | 480 h | 720 h |
|---|---|---|---|---|
| A | 1,74 | 1,70 | 1,68 | 1,64 |
| B | 1,75 | 1,71 | 1,70 | 1,65 |
| C | 1,74 | 1,68 | 1,67 | 1,62 |
| Vergleichsversuche | | | | |
| M | 1,73 | 1,63 | 1,42 | 1,31 |
| N | 1,73 | 1,71 | 1,61 | 1,52 |
| O | 1,72 | 1,57 | 1,55 | 1,49 |
| R | 1,72 | 1,61 | 1,59 | 1,48 |

[1]) Gemessen bei 25°C im Ubbelohde-Viskosimeter in Phenol/o-Dichlorbenzol (Gewichtsverhältnis 1 : 1; Konzentration 5 g Polyester/l Lösung)
[2]) Konzentration 0,1 Gew.-%

Tabelle 3

Schlagzähigkeit nach Heißwasserlagerung bei 95° C in [KJ/m²]

| Stabilisator[1]) | 200 h | 300 h | 400 h | 500 h |
|---|---|---|---|---|
| A | n.g. | n.g. | 33 | 17 |
| B | n.g. | n.g. | 31 | 13 |
| C | n.g. | n.g. | 28 | 12 |
| Vergleichsversuch | | | | |
| S | n.g. | 50% n.g. | 24<br>50% 70 | 10 |

[1]) Konzentration 0,2 Gew.-%

Die Prüfungen ergeben, daß die erfindungsgemäßen Verbindungen erheblich besser stabilisieren als die Vergleichsprodukte. Das beste der Vergleichsprodukte (S) nach Tabelle 1 ist auch im Heißwassertest den erfindungsgemäßen unterlegen. Die Vergleichsversuche S, T und S/T zeigen darüber hinaus, daß Kombinationen von guten phenolischen Stabilisatoren mit guten Phosphorigsäureester-Stabilisatoren wesentlich weniger wirksam sein können als die reinen Substanzen und die erfindungsgemäßen Stabilisatoren.

**Patentansprüche**

1. Verbindungen aus der Reihe

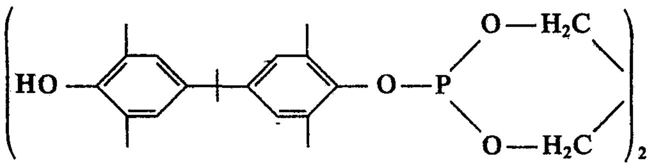

(1)

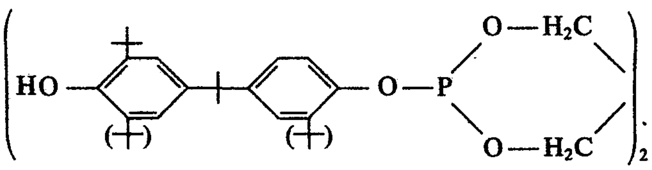

(2)

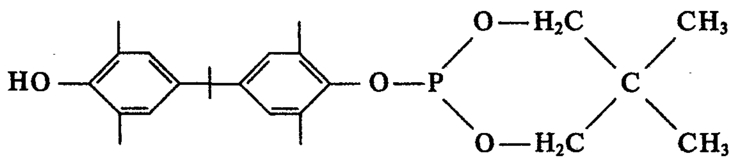

(3)

2. Verfahren zur Herstellung der Verbindungen nach Anspruch 1, dadurch gekennzeichnet, daß man reaktionsfähige Derivate der phosphorigen Säure mit

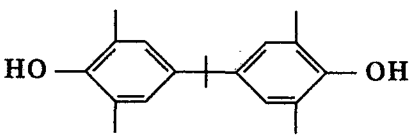

beziehungsweise

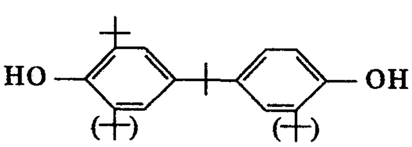

und Pentaerythrit oder Neopentylglykol in an sich bekannter Weise umsetzt.

3. Verwendung der Verbindungen nach Anspruch 1 zur Stabilisierung thermoplastischer Polyester.

4. Verwendung nach Anspruch 3, dadurch gekennzeichnet, daß der thermoplastische Polyester 0,01 bis 2,0 Gew.-% der Verbindungen der Formel I enthält.

5. Verwendung nach Ansprüchen 3 und 4, dadurch gekennzeichnet, daß der thermoplastische Polyester ein Poly(alkylen-terephthalat) ist.

6. Verwendung nach Ansprüchen 3—5, dadurch gekennzeichnet, daß die thermoplastische Polyester ein Poly(1,4-butylenterephthalat) ist.

7. Verwendung nach Ansprüchen 3—6, dadurch gekennzeichnet, daß der thermoplastische Polyester bis zu 60 Gew.-% Glasfasern, bezogen auf die Summe von Polyester und Glasfaser, enthält.

**Claims**

1. Compounds from the series comprising

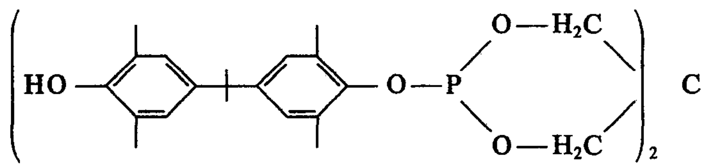

(1)

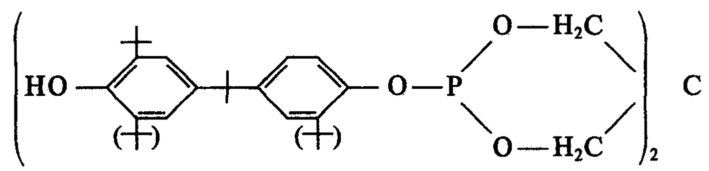

(2)

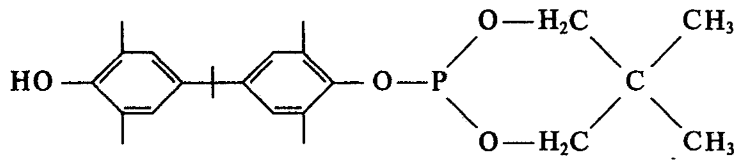

(3)

2. Process for the preparation of the compounds according to Claim 1, characterised in that reactive derivatives of phosphorous acid are reacted with

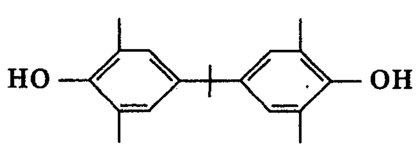

or

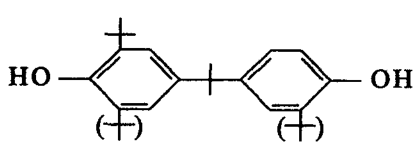

and pentaerythritol or neopentylglycol in a manner known per se.

3. Use of the compounds according to Claim 1 for stabilising thermoplastic polyesters.

4. Use according to Claim 3, characterised in that the thermoplastic polyester contains 0.01 to 2.0% by weight of the compounds of the formula I.

5. Use according to Claims 3 and 4, characterised in that the thermoplastic polyester is a poly(alkylene terephthalate).

6. Use according to Claims 3—5, characterised in that the thermoplastic polyester is a poly(1,4-butylene terephthalate).

7. Use according to Claims 3—6, characterised in that the thermoplastic polyester contains up to 60% by weight of glass fibres, based on the sum of the polyester and glass fibres.

**Revendications**

1. Composés de la série

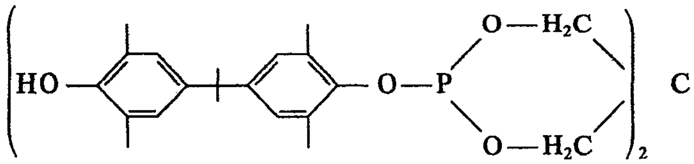
(1)

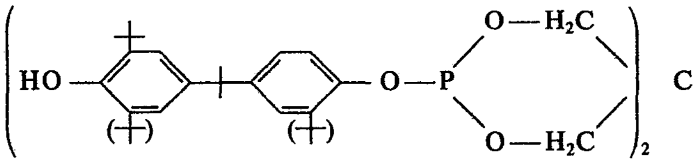
(2)

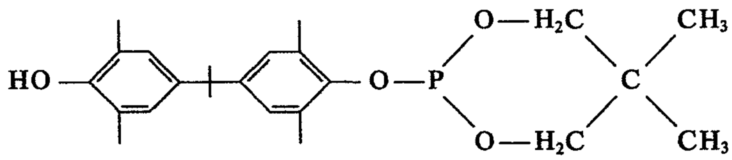
(3)

2. Procédé de produktion des composés suivant la revendication 1, caractérisé en ce qu'on fait réagir des dérivés réactifs de l'acide phosphoreux avec

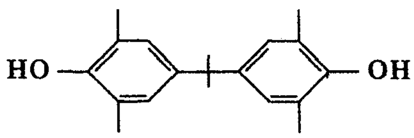

et respectivement

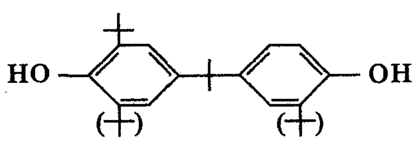

et le pentaéryththritol ou le néopentylglycol d'une manière connue.

3. Utilisation des composés suivant la revendication 1 pour la stabilisation de polyesters thermoplastiques.

4. Utilisation suivant la revendication 3, caractérisée en ce que le polyester thermoplastique contient 0,01 à 2,0% en poids des composés de formule I.

5. Utilisation suivant les revendications 3 et 4, caractérisée en ce que le polyester thermoplastique est un poly(téréphthalate d'alkylène).

6. Utilisation suivant les revendications 3—5, caractérisée en ce que le polyester thermoplastique est un poly(téréphthalate de 1,4-butylène).

7. Utilisation suivant les revendications 3—6, caractérisée en ce que le polyester thermoplastique contient jusqu'à 60% en poids de fibres de verre par rapport à la somme polyester plus fibre de verre.